# EUROPÄISCHE PATENTSCHRIFT

(11) **EP 2 939 849 B1**
(45) Veröffentlichungstag und Bekanntmachung des Hinweises auf die Patenterteilung: **18.05.2016**
(21) Anmeldenummer: 15162817.9
(22) Anmeldetag: 08.04.2015
(51) Int. Cl.: B60B 35/02, B60G 21/05, B21D 53/88, B21D 5/00

(54) **VERBUNDLENKERACHSE UND VERFAHREN ZUR HERSTELLUNG EINES TORSIONSPROFILS**
TWIST-BEAM AXLE AND METHOD FOR PRODUCING A TORSION PROFILE
ESSIEU SOUPLE À TRAVERSE DEFORMABLE EN TORSION ET PROCÉDÉ DE FABRICATION D'UN PROFIL DE TORSION

(30) Priorität: 28.04.2014 DE 102014105904
(43) Veröffentlichungstag der Anmeldung: 04.11.2015
(73) Patentinhaber: Benteler Automobiltechnik GmbH, 33102 Paderborn (DE)
(72) Erfinder: Bürger, Manfred, 33181 Bad Wünnenberg (DE); Spenner, Meinolf, 33142 Büren (DE); Niggemeyer, Norbert, 33102 Paderborn (DE)
(74) Vertreter: Griepenstroh, Jörg

(56) Entgegenhaltungen:
- EP-A1- 2 143 511
- EP-A1- 2 269 848
- EP-A2- 1 350 580
- EP-A2- 1 454 776
- WO-A1-2004/041564
- WO-A1-2014/034885
- DE-A1- 19 840 134
- DE-A1- 19 949 341
- DE-A1-102008 036 340
- DE-A1-102009 004 441
- DE-A1-102009 031 981
- DE-C1- 10 139 661
- JP-A- H10 338 010
- JP-A- 2012 131 316
- US-A1- 2010 127 470

## Beschreibung

Die Erfindung betrifft eine Verbundlenkerachse für Kraftfahrzeuge sowie ein Verfahren zur Herstellung eines Torsionsprofils für eine Verbundlenkerachse.

Verbundlenkerachsen sind im Stand der Technik hinlänglich bekannt. Sie zeichnen sich durch ihren fahrzeugspezifisch einfachen Aufbau bei geringem Raumbedarf und guten kinematischen Eigenschaften aus. Der übliche Aufbau einer Verbundlenkerachse umfasst ein Torsionsprofil mit endseitigen Längslenkern. Das die beiden seitlichen Längslenker verbindende Torsionsprofil bewirkt, dass sich bei gleichzeitigem Einfedern eine Längslenkercharakteristik und bei wechselseitigem Einfedern eine Schräglenkercharakteristik ergibt. Das Torsionsprofil wird häufig auch Querträger genannt.

Durch die DE 196 49 076 B4 zählt eine Verbundlenkerachse zum Stand der Technik, die schweißtechnisch hergestellt ist. Das Torsionsprofil ist V-förmig und über den wesentlichsten Teil seiner Länge doppellagig ausgebildet. Die Enden des Torsionsprofils sind aufgeweitete Enden, so dass hier eine gute Anbindung von Torsionsprofil und Längslenker über eine schweißtechnische Verbindung hergestellt werden kann.

Aus der DE 44 16 725 B4 oder auch der DE 196 53 959 C1 geht ebenfalls eine Verbundlenkerachse hervor sowie Verfahren zu deren Herstellung. Eine solche Verbundlenkerachse weist zwei durch ein Torsionsprofil verbundene Längslenker auf. Das Torsionsprofil besitzt einen V- oder U-förmig gemuldeten doppelwandigen Mittelabschnitt mit zwei Schenkeln. Jeder Schenkel umfasst eine Innenwand und eine Außenwand, welche an ihren freien Enden über einen Bogenabschnitt verbunden sind. Die Enden des Torsionsprofils sind üblicherweise kreisrund ausgestaltet. Die Übergänge zwischen den Enden und dem Mittelabschnitt verlaufen kontinuierlich vom kreisrunden zum eingemuldeten Querschnitt.

Des Weiteren offenbart die DE 10 2009 031 981 A1 ein Verfahren zur Herstellung eines im Mittelabschnitt doppellagigen Torsionsprofils für eine Verbundlenkerachse. Bei der Fertigung wird zunächst eine Platine mit Abstand zu ihren Stirnenden in mindestens einer Fertigungsstufe mit einer längsgerichteten U-förmigen Mulde versehen. Anschließend werden die Schenkel der verformten Platine neben der Mulde im Wesentlichen parallel zueinander und zur Mulde umgebogen, wonach die umgebogenen Schenkel unter Kontakt ihrer Längskanten in den den Stirnenden der Platine benachbarten Bereichen rohrförmig und im längenden Abschnitt mit der Mulde in Anpassung an die Kontur der Mulde U-förmig verformt werden. Danach werden die Längskanten der verformten Schenkel miteinander gefügt.

Die DE 199 49 341 A1 offenbart eine Verbundlenkerachse, wobei das Torsionsprofil aus einem Hohlprofil mit einem einlagigen bereichsweise offenen Mittelabschnitt besteht, an dem sich beidseitig rohrförmig geschlossene Enden anschließen. Das Torsionsprofil ist aus einer aus einem Blech heraus gestanzten Platine hergestellt. Die Platine besitzt symmetrisch zur Mittellinie in ihrem Mittelabschnitt eine konstante Breite, die sich zu beiden Enden auf die Breite der Endabschnitte verbreitert. Die Platine wird zum Torsionsprofil umgeformt. Bei der Umformung wird das Torsionsprofil in den Endabschnitten zu einem geschlossen hohlzylinderförmigen, insbesondere kreisförmigen Profil ausgebildet und entlang der aneinander liegenden Längsränder gefügt. Im mittleren Abschnitt des Torsionsprofils ist dieses offen und einwandig.

Auch die DE 101 22 998 A1 beschreibt eine Verbundlenkerachse mit einem Torsionsprofil, welches einen einlagigen, bereichsweise offenen Mittelabschnitt aufweist, an den sich beidseitig rohrförmig geschlossene Enden anschließen.

Das Torsionsprofil einer Verbundlenkerachse unterliegt hohen statischen und insbesondere dynamischen Belastungen. Demzufolge werden besondere Anforderungen an das Torsionsprofil gestellt. Die Endabschnitte sollen möglichst steif sein, um unerwünschte Spur- und Sturzänderungen zu vermeiden. Gleichzeitig soll das Torsionsprofil aber auch torsionsweich sein, was üblicherweise durch einen torsionsweichen Mittelabschnitt des Torsionsprofils bewirkt wird. Insbesondere im Übergangsbereich zwischen torsionsweichem Mittelabschnitt und den steifen Endabschnitten kommt es im Betrieb zu hohen Spannungsspitzen.

Zur Erhöhung der Steifigkeit der Endabschnitte von insbesondere einwandigen Torsionsprofilen ist es bekannt, die Endabschnitte durch Verstärkungsbleche zu versteifen. Eine Versteifung mittels sogenannter Schottbleche geht aus der DE 10 2009 004 441 A1 hervor. Auch das Torsionsprofil der aus der DE 10 2008 036 340 A1 bekannten Verbundlenkerachse wird durch Schottbleche versteift.

Die Schottbleche sind in das offene Torsionsprofil eingeschweißt. Unter der statischen und insbesondere dynamischen Belastung kann es zu Problemen in der Schweißnahtverbindung kommen, insbesondere wegen Ermüdungserscheinungen in Folge der hohen Spannungen beim wechselseitigen Federn des Torsionsprofils. Dies kann die Lebensdauer einer Verbundlenkerachse beeinträchtigen.

Bei den zuvor beschriebenen doppelwandigen Torsionsprofilen wird ein Verstärkungsblech vermieden. Man ist bestrebt, den Übergang vom Mittelbereich mit geringer Steifigkeit zum Endbereich mit hoher Steifigkeit gleichmäßig zu gestalten. Allerdings erfordert die doppelwandige Ausgestaltung einen höheren Materialeinsatz mit entsprechend höherem Gewicht. Außerdem besitzt ein solches Torsionsprofil im mittleren Bereich dann eine höhere Torsionssteifigkeit.

Weiterhin offenbart die DE 198 40 134 A1 eine weitere Verbundlenker-Hinterachse für ein Kraftfahrzeug, bei dem zwei Längslenker über einen Querträger miteinander verbunden werden. Hierbei ist der Längslenker aus einem Leichtmetall, bevorzugt einem Leichtmetallhohlprofil, ausgebildet. Hergestellt wird der Verbundlenker hierbei bevorzugt über einen Gussprozess, welcher ein Anbauteil als integralen Bestandteil des Längslenkers bereits während der Herstellung einschließt.

Durch die DE 44 41 971 A1 zählt eine weitere Kraftfahrzeug-Hinterachse zum Stand der Technik, welche aus einem Längslenker sowie einer den Längslenker mit einer Kraftfahrzeugachse verbindenden Querstrebe besteht. Hierbei ist die Querstrebe als Aluminiumstrangpressprofil ausgebildet und soll so, neben einer variablen Einsetzbarkeit der Hinterachse, das Gewicht der Kraftfahrzeugachse merklich reduzieren.

Weiterhin zeigt die US 2010/0127470 A1 eine aus mehreren Teilen bestehende Verbundlenkerachse, wobei eine Vielzahl von unterschiedlichen Materialien verwendet wird. Hierdurch soll es möglich sein, die Achse besonders vielseitig an die an sie gestellten Anforderungen anzupassen.

Ähnliches gilt ebenfalls für die US 5,507,518 A1, bei der die Verbundlenkerachse über die verwendeten Formprozesse besonders vorteilhafte Eigenschaften aufweisen soll. Hierzu gehört insbesondere die Reduktion der verwendeten Einzelteile, da die Achse in einer bevorzugten Ausgestaltung zumindest aus einem Blech hergestellt ist.

Schließlich zeigt die DE 198 08 172 A1 eine weitere Ausgestaltung eines Torsionsquerträgers, welcher mit Längslenkern sowie einer daran befestigten Radaufhängung verbunden ist. Hierbei sollen die Schweißnähte durch die Ausgestaltung der Achsanordnung im Vergleich zu anderen Achsen deutlich weniger belastet werden, ohne dass das Torsionsverhalten der gesamten Radaufhängung beeinträchtigt wird.

Der Erfindung liegt ausgehend vom Stand der Technik die Aufgabe zugrunde, eine Verbundlenkerachse funktional zu verbessern und insbesondere ein funktionssicheres Torsionsprofil mit hoher Biegesteifigkeit und geringerer Rollsteifigkeit für eine Verbundlenkerachse zu schaffen sowie ein Verfahren zur Fertigung eines solchen Torsionsprofils aufzuzeigen.

Gegenständlich wird die Aufgabe durch eine Verbundlenkerachse mit einem Torsionsprofil gemäß den Merkmalen von Patentanspruch 1 gelöst.

Der verfahrensmäßige Teil der Aufgabe wird durch ein Verfahren mit den Maßnahmen von Anspruch 8 gelöst.

Vorteilhafte Ausgestaltung und Weiterbildungen der erfindungsgemäßen Verbundlenkerachse und des Verfahrens zeigen die abhängigen Ansprüche 2 bis 7 bzw. die Ansprüche 9 und 10 auf.

Die Verbundlenkerachse für ein Kraftfahrzeug weist zwei Längslenker auf, welche durch ein Torsionsprofil verbunden sind. Das Torsionsprofil ist materialeinheitlich einstückig aus einer Platine, insbesondere einer Platine aus einem Stahlwerkstoff, gefertigt. Die Platine weist einen Mittelabschnitt und endseitig gegenüber dem Mittelabschnitt verbreiterte Flansche auf. Der Mittelabschnitt ist zu einem U- oder V-förmigen Profil umgeformt und einseitig offen. Das Torsionsprofil besitzt entsprechend einen einseitig offenen, einlagigen, im Querschnitt U- bzw. V-förmigen Mittelabschnitt. An den Mittelabschnitt schließen sich beidseitig Endabschnitte an. Hierzu sind die Flansche zu sich an den Mittelabschnitt anschließenden Endabschnitten mit einem geschlossenen Hohlprofil umgeformt und entlang ihrer aneinander liegenden Längsränder gefügt.

Gemäß der Erfindung weist das Torsionsprofil über den überwiegenden Teil seiner Länge einen einlagigen, bereichsweise offenen Mittelabschnitt auf. An den Mittelabschnitt schließen sich zu beiden Enden hin, also beidseitig, jeweils über einen Übergangsabschnitt rohrförmig geschlossene Endabschnitte an. Nach der Erfindung sind die Übergangsabschnitte doppelwandig. Das Torsionsprofil ist materialeinheitlich einstückig aus einer Platine gefertigt und formgebend bearbeitet. Bei der Umformung der Metallplatine ist der Mittelabschnitt U- oder V-förmig, bereichsweise offen gestaltet. In den Übergangsabschnitten ist das Torsionsprofil doppelwandig. Doppelwandig bedeutet, dass Wandbereiche des Profils übereinanderliegen. Die übereinanderliegenden Wandabschnitte bzw. Wandbereiche der Übergangsabschnitte erweitern sich in Richtung der Endabschnitte und gehen in die rohrförmigen, hohlzylindrischen Endabschnitte über. Die übereinanderliegenden doppelwandigen Wandbereiche der Übergangsabschnitte liegen zumindest bereichsweise parallel zueinander und können sich bereichsweise kontaktieren.

Ein weiterer erfindungsgemäßer Aspekt sieht vor, dass die Flansche von der offenen Seite des Mittelabschnitts nach außen umgeformt sind und in einer oberhalb der offenen Seite des Mittelabschnitts liegenden horizontalen Längsebene gefügt. Insbesondere sind die Flansche mit ihren Längsrändern in der Verlängerung der Oberseite des Torsionsprofils gefügt, wobei die Fügung bzw. die Fügelinie in der vertikalen Mittellängsebene des Torsionsprofils verläuft. Insbesondere sind die Längsränder miteinander verschweißt. Die Begriffe "oberhalb" und "Oberseite" beziehen sich auf die Einbaulage des Torsionsprofils innerhalb der Verbundlenkerachse. Die offene Seite des Mittelabschnitts ist bei einer in einem Kraftfahrzeug verbauten Verbundlenkerachse nach unten gerichtet.

Die Fügung bzw. die Fügelinie liegt auf der der offenen Seite des Mittelabschnitts gegenüberliegenden Seite der Endabschnitte. Bei dieser Ausgestaltung verläuft die Fügung bzw. die Fügelinie im weniger belasteten Bereich an der Außenseite der Enden des Torsionsprofils. Gleiches gilt für die Übergangsabschnitte vom Mittelabschnitt zu den Endabschnitten.

Im Mittelabschnitt ist das Torsionsprofil offen und einwandig. In den Endabschnitten ist das Torsionsprofil doppelwandig, wobei doppelwandig nicht bedeutet, dass zwei Wände bzw. Wandabschnitte der Endabschnitte mit Kontakt vollflächig aneinander liegen, insbesondere nicht über die gesamte Länge eines Endabschnitts. Das Torsionsprofil ist im Mittelabschnitt biegesteif und torsionsweich. In den Endbereichen besitzt das Torsionsprofil eine hohe Torsionssteifigkeit. Ein zusätzlich eingeschweißtes Verstärkungsblech ist nicht notwendig und kann entfallen. Das erfindungsgemäße Torsionsprofil vereinigt die Vorteile von ein- und doppelwandigen Profilen, wobei bekannte Nachteile vermieden werden. Das Torsionsprofil zeichnet sich durch eine hohe Biegesteifigkeit aus bei geringer Rollsteifigkeit.

Die Kontur bzw. der Querschnittsverlauf in den Endabschnitten und der Flächeninhalt der Endabschnitte in ihrem Längsverlauf wird der Spannungsverteilung optimiert angepasst. An den freien Enden ist das Torsionsprofil offen. Der offene Querschnitt an den Enden ermöglicht eine bauteilgerechte vorteilhafte Anbindung jeweils zu einem seitlichen Längslenker.

Bei einer vorteilhaften Ausgestaltung können die quer zu den Längsrändern verlaufenden auf der Seite des Mittelabschnitts liegenden inneren Seitenränder der Flansche mit der Oberseite des Torsionsprofils gefügt sein. Die Fügung kann partiell oder sich über den gesamten Bereich zu der Länge der Querränder erstrecken.

Im Mittelabschnitt weist das Torsionsprofil ein einseitig offenes U- oder V-förmiges Profil auf. Das Torsionsprofil besitzt im Mittelabschnitt zwei Schenkel und einen die Schenkel verbindenden oberen Wandbereich, beispielsweise einen Steg. Ein Aspekt sieht vor, dass die Fügelinie der gefügten Seitenränder der Flansche sich im Wesentlichen in der Verlängerung eines oberen Wandbereichs des Mittelabschnitts, insbesondere des Stegs des Mittelabschnitts erstreckt.

Eine weitere vorteilhafte Ausgestaltung sieht vor, dass der Mittelabschnitt, insbesondere ein oberseitiger Wandbereich des Mittelabschnitts über einen Übergangsabschnitt in einen unterseitigen Wandbereich eines Endabschnitts übergeht.

Die Platine ist im Ausgangszustand eben und in einer für die Fertigung des Torsionsprofils notwendigen Geometrie bzw. Konfektion zugeschnitten, insbesondere in einem Blechzuschnitt mit der Umfangsgeometrie, die der Abwicklung des Torsionsprofils entspricht. Die Blechplatine weist einen Mittelabschnitt auf, an den sich an beiden Enden gegenüber dem Mittelabschnitt verbreiterte Endabschnitte anschließen. Die Blechplatine weist eine erste Flachseite (Unterseite) und eine zweite Flachseite (Oberseite) auf. Die Blechplatine wird zum Torsionsprofil umgeformt. Der Mittelabschnitt wird zu einem U- oder V-förmigen Profil umgeformt, welcher einlagig und einseitig offen ist. Die sich an den Endabschnitt anschließenden Flansche werden zu Endabschnitten mit einem geschlossenen Hohlprofil umgeformt. Hierzu werden die Flansche von der offenen Seite des Mittelabschnitts weg nach außen umgeformt bzw. gebogen und nach oben umgestellt sowie eingeformt bis die Längsränder der Flansche stumpf aneinander stoßen. Entlang der aneinander liegenden Längsränder werden die Flansche dann gefügt.

Die Umformung der Platine zum Torsionsprofil erfolgt dergestalt, dass die eine Flachseite der Platine, beispielsweise die erste Flachseite bzw. Unterseite der Platine, beim umgeformten Torsionsprofil die Außenseite des Mittelabschnitts bildet. Die Umformung der Flansche zu den Endabschnitten erfolgt dergestalt, dass die Flansche nach außen umgebogen und zu einem Hohlprofil geformt werden. Die erste Flachseite der Platine wird im Bereich der Flansche zur Innenseite der Endabschnitte. Entsprechend wird die zweite Flachseite (Oberseite) der Platine im Bereich der Flansche zur Außenseite der Endabschnitte.

Der Flächeninhalt der Endabschnitte im vertikalen Querschnitt variiert über die Länge der Endabschnitte. Wie bereits erwähnt, ist das Torsionsprofil an seinen Enden offen und geometrisch mit einer Anbindungskontur zur Festlegung am Längslenker versehen.

Die Flansche werden vom Mittelabschnitt weg nach außen umgeformt und auf der Oberseite des Torsionsprofils entlang ihrer Längsränder übereinander liegend oder auf Stoß zusammengeführt. Anschließend werden die Flansche entlang der Seitenränder gefügt. Die Fügung erfolgt in einer oberhalb der offenen Seite des Mittelabschnitts liegenden horizontalen Längsebene, insbesondere erstreckt sich die Fügung in der vertikalen Mittellängsebene des Torsionsprofils. Die Ausgangsplatine ist in diesem Fall symmetrisch zu ihrer Mittellinie gestaltet. Die Platine besitzt eine konstante Breite im Mittelabschnitt. An diesen schließen sich an beiden Enden jeweils verbreiterte Flansche an. Der Übergang vom Mittelabschnitt zu der äußeren Breite der Flansche kann kontinuierlich gebogen oder auch rechtwinklig oder stufenartig erfolgen. Im Bereich des Übergangs vom Mittelabschnitt der Platine zum Flansch kann auch eine Schnittkontur mit einem Ausschnitt vorgesehen sein, um im Übergang einen Freischnitt bzw. Freistich zu realisieren. Diese Ausgestaltung verfolgt das Ziel, Spannungsspitzen zu reduzieren bzw. abzubauen.

Die Erfindung ist nachfolgend anhand von Zeichnungen näher beschrieben. Es zeigen:
- Figur 1: eine erfindungsgemäße Verbundlenkerachse in einer perspektivischen Darstellungsweise;
- Figur 2: einen Längsschnitt durch die Verbundlenkerachse gemäß der Darstellung von Figur 1;
- Figur 3: einen Ausschnitt aus dem Verbindungsbereich zwischen Torsionsprofil und Längslenker einer weiteren Ausführungsform einer Verbundlenkerachse;
- Figur 4: Schnittdarstellungen durch das Torsionsprofil gemäß der Darstellung von Figur 3 in den Bereichen A), B), C) und D);
- Figur 5: ein Fertigungsschema eines Torsionsprofils mit der Darstellung von fünf aufeinanderfolgenden Arbeitsschritten und
- Figur 6: technisch schematisiert einen Ausschnitt aus einem Metallband mit der Darstellung eines Schnittmusters zur Herstellung von Platinen als Ausgangsprodukt für die Fertigung eines Torsionsprofils.

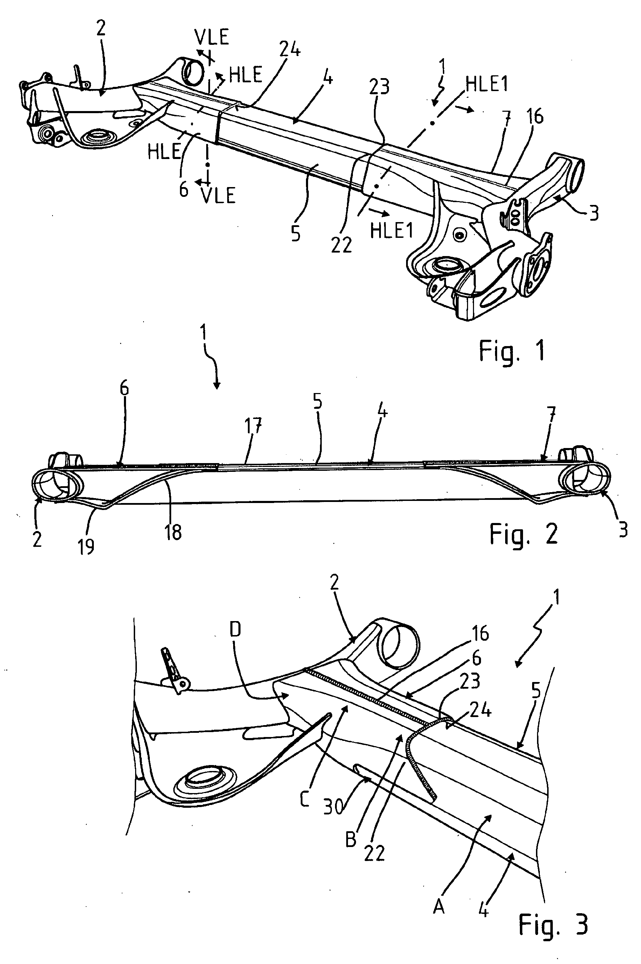

Die Figuren 1 und 2 zeigen eine Verbundlenkerachse 1 für ein Kraftfahrzeug. Die Figur 3 zeigt einen Ausschnitt aus einer weiteren Verbundlenkerachse 1, die gleichartig aufgebaut ist. Gleiche oder einander entsprechende Bauteile bzw. Bauteilkomponenten sind in den Figuren 1 bis 3 mit den gleichen Bezugszeichen versehen.

Die Verbundlenkerachse 1 umfasst im Wesentlichen zwei radführende Längslenker 2,3 und ein die beiden Längslenker 2,3 verbindendes Torsionsprofil 4. Das Torsionsprofil 4 weist einen einseitig offenen, im Querschnitt U- oder V-förmigen Mittelabschnitt 5 auf, an den sich beidseitig jeweils ein Endabschnitt 6, 7 anschließt.

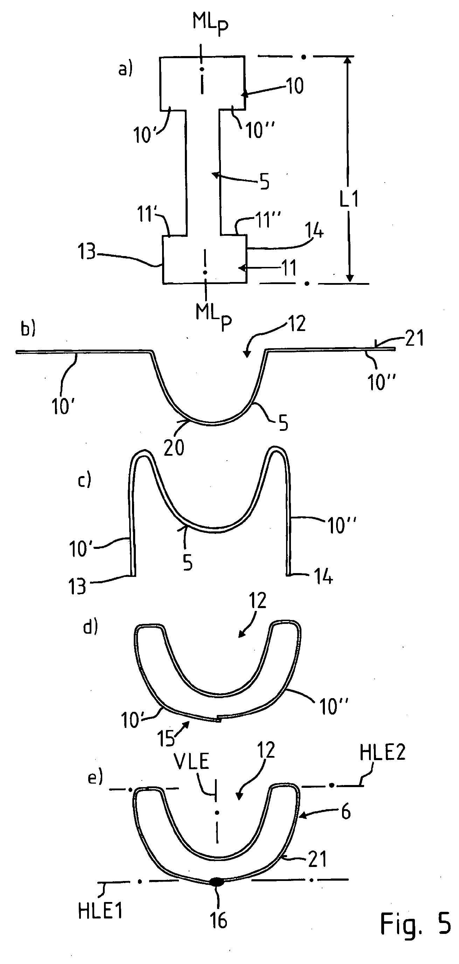

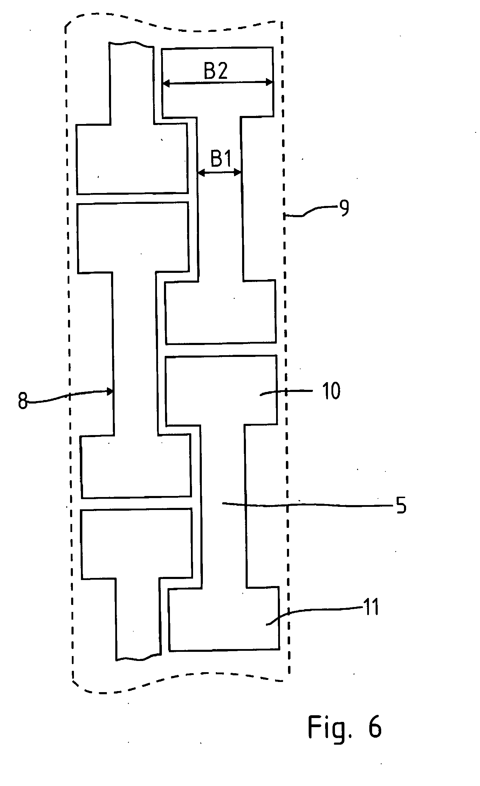

Das Torsionsprofil 4 ist aus einer Platine 8 gefertigt. Eine Platine 8 ist schematisch in der Figur 5a) dargestellt und in gleichartiger Konfiguration auch in der Figur 6 zu erkennen. Die einzelnen Platinen 8 werden als Blechzuschnitt aus einem Metallband 9 gestanzt. Wie die Figur 6 zeigt, werden die einzelnen Zuschnitte der Platinen 8 im Metallband 9 verschachtelt, sodass das Metallband 9 werkstoffmäßig bestmöglich ausgenutzt wird.

Jede Platine 8 weist einen Mittelabschnitt 5 auf, an welchen sich jeweils endseitig gegenüber dem Mittelabschnitt 5 verbreiterte Flansche 10,11 anschließen. Die Platine 8 ist symmetrisch zu ihrer Mittellinie ML_{P} gestaltet und besitzt im Mittelabschnitt 5 eine konstante Breite B1. An den Mittelabschnitt 5 schließt sich jeweils mit einem rechtwinkligen Übergang der rechteckig konfigurierte Flansch 10 bzw. 11 an. Der Flansch 10, 11 besitzt eine Breite B2 die größer ist als die Breite B1 des Mittelabschnitts 5. Die Länge L1 der Platine 8 entspricht im Wesentlichen der Länge des Torsionsprofils 4 unter Berücksichtigung etwaiger endseitiger Konfigurationsschnitte am Torsionsprofil 4.

Das Torsionsprofil 4 ist durch Umformen einer Platine 8 hergestellt. Die Figur 5a) bis e) zeigt fünf Arbeits- bzw. Umformschritte bei der Herstellung eines Torsionsprofils 4. Der Mittelabschnitt 5 wird zu einem U- oder V-förmigen Profil umgeformt und ist einseitig offen. In der Darstellung der Figur 5 zeigt die offene Seite 12 in der Bildebene nach oben. In der Einbaulage des Torsionsprofils innerhalb der Verbundlenkerachse 1 zeigt die offene Seite 12 nach unten. Die Flansche 10, 11 werden zudem sich an den Mittelabschnitt 5 anschließenden Endabschnitt 6, 7 mit einem geschlossenen Hohlprofil umgeformt. Hierbei werden die Flansche 10, 11 bzw. seitliche Flanschabschnitte 10', 10", 11', 11" von der offenen Seite 12 des Mittelabschnitts 5 nach außen umgeformt und nach oben in Richtung der U-förmigen Ausstellung des Mittelabschnitts 5 gezogen, so dass die äußeren Längsränder 13, 14 auf der der offenen Seite 12 des Mittelabschnitts 5 gegenüberliegenden Seite 15 in Kontakt gelangen bzw. aneinander stoßen. In dieser oberhalb der offenen Seite 12 des Mittelabschnitts 5 liegenden horizontalen Längsebene HLE1 werden die Längsränder 13, 14 miteinander stoffschlüssig gefügt, insbesondere verschweißt. Die sich durch die offene Seite 12 des Mittelabschnitts 5 erstreckende horizontale Längsebene ist mit HLE2 bezeichnet. Die Fügung 16 bzw. die Fügenaht entlang der aneinander liegenden Längsränder 13, 14 der Flansche 10, 11 verläuft in der vertikalen Mittellängsebene VLE des Torsionsprofils 4.

Die Figuren 1 und 3 verdeutlichen auch, dass die Fügung 16 der aneinander liegenden Längsränder 13, 14 der Flansche 10, 11 sich im Wesentlichen in der Verlängerung eines oberen Wandbereichs 17 des Mittelabschnitts 5 erstreckt.

Der Mittelabschnitt 5 geht beidseitig über einen Übergangsabschnitt 18 jeweils in einen Endabschnitt 6 bzw. 7 über. Hierbei wird der oberseitige Wandbereich 17 des Mittelabschnitts 5 über den Übergangsabschnitt 18 in einen unterseitigen Wandbereich 19 eines Endabschnitts 6 bzw. 7 umgeformt. Die Übergangsabschnitte 18 sind doppelwandig. In den Übergangsabschnitten 18 laufen Wandbereiche des Torsionsprofils 4 übereinander, teilweise aneinander liegend und parallel zueinander.

Eine erste Flachseite der Platine 8 bildet die Außenseite 20 im Mittelabschnitt 5 des Torsionsprofils 4. In den Endabschnitten 6, 7 wird die gegenüberliegende zweite Flachseite der Platine 8 durch die Umformung der Flansche 10, 11 zur Außenseite 21 der Endabschnitte 6 bzw. 7.

Innere quer zu den Längsrändern 13, 14 verlaufende Seitenränder 22, 23 der Flansche 10, 11 sind mit der Oberseite 24 des Torsionsprofils 4 stoffschlüssig gefügt.

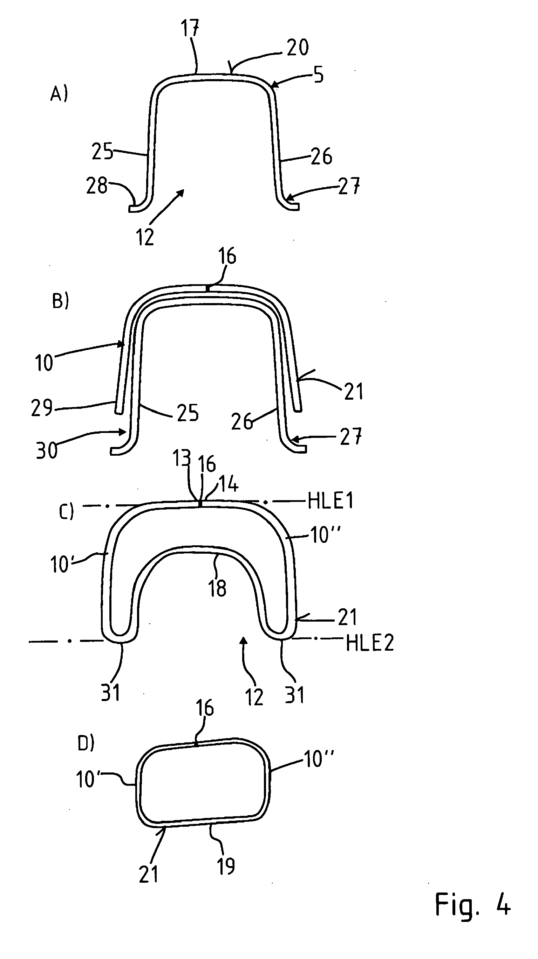

Die Figur 4 zeigt in den Einzeldarstellung A), B), C) und D) Schritte durch die Bereiche A), B), C) bzw. D) des Torsionsprofils 4 gemäß der Darstellung von Figur 3.

Die Figur 4 A) zeigt einen Schnitt durch den Mittelabschnitt 5 des Torsionsprofils 4. Man erkennt, dass der Mittelabschnitt 5 einlagig und einseitig offen ist. Das Profil ist U-förmig mit zwei Schenkeln 25, 26, die durch den oberen Wandbereich 17 in Form eines Stegs miteinander verbunden sind. Die freien Enden 27 der Schenkel 25, 26 weisen eine nach außen gerichtete Umstellung 28 auf.

Die Figur 4 B) zeigt einen Schnitt durch den Bereich B) im Endabschnitt 6 des Torsionsprofils 4. Man erkennt das U-Profil des Mittelabschnitts 5. Oberseitig des Mittelabschnitts 5 mit Abstand zu diesem sind die Flansche 10, 11 zusammengeführt und entlang der aneinander liegenden Seitenränder 13, 14 mittels der Fügung 16 schweißtechnisch verbunden. Zwischen unteren Endbereichen 29 der Flansche 10, 11 und den freien Enden 27 der Schenkel 25, 26 ist ein Freischnitt 30 vorhanden.

Figur 4 C) zeigt einen Schnitt durch den Bereich C) des Endabschnitts 6 gemäß der Darstellung von Figur 3. Dargestellt ist der Übergangsabschnitt 18, der in Verlängerung des oberen Wandbereichs 17 und der Schenkel 25, 26 des Mittelabschnitts 5 verläuft und sich in Richtung des unteren Wandbereichs 19 (siehe Figur 4D)) verjüngt. Die Flansche 10, 11 sind über Bogenabschnitte 31 vom Übergangsabschnitt 18 ausgehend nach oben umgelenkt und zusammengeführt. Auf diese Weise wird ein geschlossenes Hohlprofil gebildet. Die Fügung der Flansche 10, 11 erfolgt in der horizontalen Längsebene HLE1 oberhalb der sich durch die offene Seite 12 erstreckende horizontale Längsebene HLE2.

Schließlich zeigt die Figur 4 D) das Querschnittsprofil im Endabschnitt 6 im Bereich D). Der Querschnitt ist rechteckförmig mit dem unterseitigen Wandbereich 19, an den sich die Flansche 10, 11 anschließen, die in der gegenüber der offenen Seite 12 des Mittelabschnitts 5 oberhalb liegenden Horizontalebene HLE1 miteinander gefügt sind. Das Ende ist offen und besitzt stirnseitig eine Anbindungskontur zur Festlegung am Längslenker 2.

### Bezugszeichen:

- 1 -: Verbundlenkerachse
- 2 -: Längslenker
- 3 -: Längslenker
- 4 -: Torsionsprofil
- 5 -: Mittelabschnitt
- 6 -: Endabschnitt
- 7 -: Endabschnitt
- 8 -: Platine
- 9 -: Metallband
- 10 -: Flansch
- 11 -: Flansch
- 12 -: offene Seite v. 5
- 13 -: Längsrand
- 14 -: Längsrand
- 15 -: Seite
- 16 -: Fügung
- 17 -: oberer Wandbereich vom 5
- 18 -: Übergangsabschnitt
- 19 -: unterer Wandbereich von 6, 7
- 20 -: Außenseite
- 21 -: Außenseite
- 22 -: Seitenrand
- 23 -: Seitenrand
- 24 -: Oberseite von 4
- 25 -: Schenkel
- 26 -: Schenkel
- 27 -: freies Ende von 25, 26
- 28 -: Umstellung
- 29 -: Endbereich
- 30 -: Freischnitt
- 31 -: Bogenabschnitt
- B1 -: Breite
- B2 -: Breite
- HLE1 -: horizontale Längsebene
- HLE2 -: horizontale Längsebene
- ML_{P} -: Mittellinie
- VLE -: Mittellängsebene

## Patentansprüche

1. Verbundlenkerachse für ein Kraftfahrzeug, welche zwei Längslenker (2, 3) und ein die Längslenker (2, 3) verbindendes Torsionsprofil (4) aufweist, wobei das Torsionsprofil (4) einen einlagigen, bereichsweise offenen Mittelabschnitt (5) besitzt, an den sich beidseitig jeweils über einen Übergangsabschnitt (18) rohrförmig geschlossene Endabschnitte (6, 7) anschließen, **dadurch gekennzeichnet, dass** das Torsionsprofil (4) materialeinheitlich einstückig aus einer Platine (8) gefertigt ist und die Übergangsabschnitte (18) doppelwandig sind, wobei die Wandbereiche des Torsionsprofils (4) übereinander liegen.

2. Verbundlenkerachse nach Anspruch 1, **dadurch gekennzeichnet, dass** übereinanderliegende Wandbereiche des Übergangsabschnitts (18) sich bereichsweise kontaktieren.

3. Verbundlenkerachse für ein Kraftfahrzeug nach Anspruch 1 oder 2, wobei das Torsionsprofil (4) aus einer Platine (8) gefertigt ist, welche einen Mittelabschnitt (5) und endseitig gegenüber dem Mittelabschnitt (5) verbreiterte Flansche (10, 11) besitzt, wobei der Mittelabschnitt (5) zu einem U- oder V-förmigen Profil umgeformt und einseitig offen ist, und wobei die Flansche (10, 11) zu sich an den Mittelabschnitt (5) anschließenden Endabschnitten (6,7) mit einem geschlossenen Hohlprofil umgeformt und entlang ihrer aneinander liegenden Längsränder (13, 14) gefügt sind, **dadurch gekennzeichnet, dass** die Flansche (10, 11) von der offenen Seite (12) des Mittelabschnitts (5) nach außen umgeformt und in einer oberhalb der offenen Seite (12) des Mittelabschnitts (5) liegenden horizontalen Längsebenen (HLE1) gefügt sind.

4. Verbundlenkerachse nach Anspruch 3, **dadurch gekennzeichnet, dass** die Fügung (16) der aneinander liegenden Längsränder (13, 14) der Flansche (10, 11) in der vertikalen Mittellängsebene (VLE) des Torsionsprofils (4) verläuft.

5. Verbundlenkerachse nach einem der Ansprüche 3 oder 4, **dadurch gekennzeichnet, dass** die Fügung (16) der aneinander liegenden Längsränder (13, 14) der Flansche (10,11) sich im Wesentlichen in der Verlängerung eines oberen Wandbereichs (21) des Mittelabschnitts (5) erstreckt.

6. Verbundlenkerachse nach einem der Ansprüche 3 bis 5, **dadurch gekennzeichnet, dass** innere quer zu den Längsrändern (13, 14) verlaufende Seitenränder (22, 23) der Flansche (10, 11) mit der Oberseite (24) des Torsionsprofils (4) gefügt.

7. Verbundlenkerachse nach einem der Ansprüche 3 bis 6, **dadurch gekennzeichnet, dass** ein oberseitiger Wandbereich (17) des Mittelabschnitts (5) über einen Übergangsabschnitt (18) in einen unterseitigen Wandbereich (19) eines Endabschnitts (6, 7) übergeht.

8. Verfahren zur Herstellung eines Torsionsprofils (4) für eine Verbundlenkerachse nach einem der Ansprüche 1 bis 7, wobei eine Platine (8) bereit gestellt wird, welche einen Mittelabschnitt (5) und endseitig gegenüber dem Mittelabschnitt (5) verbreiterte Flansche (10, 11) besitzt, und die Platine (8) zum Torsionsprofil (4) umgeformt wird, wobei der Mittelabschnitt (5) zu einem einseitig offenen, U- oder V-förmigen Profil umgeformt und die Flansche (10, 11) zu sich an den Mittelabschnitt (5) anschließenden Endabschnitten (6,7) mit einem geschlossenen Hohlprofil umgeformt werden und die Flansche (10, 11) entlang ihrer aneinander liegenden Längsränder (13, 14) gefügt werden, **dadurch gekennzeichnet, dass** die Flansche (10, 11) von der offenen Seite (12) des Mittelabschnitts (5) nach außen umgeformt werden und in einer oberhalb der offenen Seite (12) des Mittelabschnitts (5) liegenden horizontalen Längsebenen (HLE1) miteinander gefügt werden.

9. Verfahren nach Anspruch 8, **dadurch gekennzeichnet, dass** die Platine (8) so umgeformt wird, dass ein oberseitiger Wandbereich (17) des Mittelabschnitts (5) über einen Übergangsabschnitt (18) in einen unterseitigen Wandbereich (19) eines Endabschnitts (6, 7) übergeht.

10. Verfahren nach Anspruch 8 oder 9, **dadurch gekennzeichnet, dass** auf der Seite zum Mittelabschnitt (5) liegende innere, quer zu den Längsrändern (13, 14) verlaufende Seitenränder (22, 23) die Oberseite des Torsionsprofils (4) kontaktieren und mit diesem zumindest partiell gefügt sind.

## Claims

1. Torsion beam axle for a motor vehicle, which comprises two trailing arms (2, 3) and a torsion profile (4) connecting the trailing arms (2, 3), the torsion profile (4) having a single-layer, partially open central portion (5), adjoining which, on both sides, are end portions (6, 7) closed off in a tube shape by means of a transitional portion (18), **characterised in that** the torsion profile (4) is manufactured in one piece, in materially uniform manner, from a plate (8) and the transitional portions (18) are double-walled, the wall regions of the torsion profile (4) being superimposed on one another.

2. Torsion beam axle according to claim 1, **characterised in that** superimposed wall regions of the transitional portion (18) are in partial contact with one another.

3. Torsion beam axle for a motor vehicle according to claim 1 or 2, wherein the torsion profile (4) is made from a plate (8) which has a central portion (5) and flanges (10, 11) which are widened at the ends relative to the central portion (5), the central portion (5) being shaped to form a U- or V-shaped profile and being open on one side, and the flanges (10, 11) being shaped to form end portions (6, 7) with a closed hollow profile which adjoin the central portion (5) and are joined along their abutting longitudinal edges (13, 14), **characterised in that** the flanges (10, 11) are formed to extend outwards from the open side (12) of the central portion (5) and are joined in a horizontal longitudinal plane (HLE1) located above the open side (12) of the central portion (5).

4. Torsion beam axle according to claim 3, **characterised in that** the joint (16) between the abutting longitudinal edges (13, 14) of the flanges (10, 11) extends along the vertical central longitudinal plane (VLE) of the torsion profile (4).

5. Torsion beam axle according to one of claims 3 or 4, **characterised in that** the joint (16) between the abutting longitudinal edges (13, 14) of the flanges (10, 11) extends substantially on an extension of an upper wall region (21) of the central portion (5).

6. Torsion beam axle according to one of claims 3 to 5, **characterised in that** inner side edges (22, 23) of the flanges (10, 11) extending transversely with respect to the longitudinal edges (13, 14) are joined to the top (24) of the torsion profile (4).

7. Torsion beam axle according to one of claims 3 to 6, **characterised in that** a top wall region (17) of the central portion (5) merges into a bottom wall region (19) of an end portion (6, 7) via a transitional portion (18).

8. Method for producing a torsion profile (4) for a torsion beam axle according to one of claims 1 to 7, wherein a plate (8) is provided which has a central portion (5) and flanges (10, 11) which are widened at the ends relative to the central portion (5), and the plate (8) is shaped to form the torsion profile (4), the central portion (5) being shaped to form a U- or V-shaped profile open on one side, and the flanges (10, 11) being shaped to form end portions (6, 7) with a closed hollow profile which adjoin the central portion (5),the flanges (10, 11) being joined along their abutting longitudinal edges (13, 14), **characterised in that** the flanges (10, 11) are formed to extend outwards from the open side (12) of the central portion (5) and are joined together in a horizontal longitudinal plane (HLE1) located above the open side (12) of the central portion (5).

9. Method according to claim 8, **characterised in that** the plate (8) is shaped so that a top wall region (17) of the central portion (5) merges into a bottom wall region (19) of an end portion (6, 7) via a transitional portion (18).

10. Method according to claim 8 or 9, **characterised in that** inner side edges (22, 23) located on the side towards the central portion (5) and extending transversely with respect to the longitudinal edges (13, 14) make contact with the top of the torsion profile (4) and are at least partially joined thereto.

## Revendications

1. Essieu à traverse déformable en torsion pour un véhicule automobile, qui présente deux bras oscillants longitudinaux (2, 3) et un profilé de torsion (4) reliant les bras oscillants longitudinaux (2, 3), dans lequel le profilé de torsion (4) possède une section centrale monocouche (5) ouverte par endroits à laquelle se raccordent des deux côtés des sections d'extrémité (6, 7) fermées en forme de tube respectivement via une section de transition (18), **caractérisé en ce que** le profilé de torsion (4) est fabriqué d'un seul matériau d'une seule pièce d'une platine (8) et les sections de transition (18) sont à double paroi, dans lequel les zones de paroi du profilé de torsion (4) sont superposées.

2. Essieu à traverse déformable en torsion selon la revendication 1, **caractérisé en ce que** les zones de paroi superposées de la section de transition (18) sont en contact par zones.

3. Essieu à traverse déformable en torsion pour un véhicule automobile selon la revendication 1 ou la revendication 2, **caractérisé en ce que** le profilé de torsion (4) est constitué d'une platine (8) qui possède une section centrale (5) et des ailes (10, 11) élargies côté extrémité par rapport à la section centrale (5), dans lequel la section centrale (5) est façonnée en U ou en V et ouverte d'un côté, dans lequel les ailes (10, 11) sont façonnées aux sections d'extrémité (6, 7) se raccordant à la section centrale (5) avec un profilé creux fermé et sont jointes le long de leurs bords longitudinaux adjacents (13, 14), **caractérisé en ce que** les ailes (10, 11) sont façonnées du côté ouvert (12) de la section centrale (5) vers l'extérieur et sont joints dans un plan longitudinal horizontal (HLE1) qui se situe au-dessus du côté ouvert (12) de la section centrale (5).

4. Essieu à traverse déformable en torsion selon la revendication 3, **caractérisé en ce que** la liaison (16) des bords longitudinaux adjacents (13, 14) des ailes (10, 11) s'étend dans le plan longitudinal central vertical (VLE) du profilé de torsion (4).

5. Essieu à traverse déformable en torsion selon l'une quelconque des revendications 3 ou 4, **caractérisé en ce que** la liaison (16) des bords longitudinaux adjacents (13, 14) des ailes (10, 11) s'étend sensiblement dans le prolongement d'une zone de paroi supérieure (21) de la section centrale (5).

6. Essieu à traverse déformable en torsion selon l'une quelconque des revendications 3 à 5, **caractérisé en ce que** des bords latéraux internes (22, 23) des ailes (10, 11) s'étendant transversalement aux bords longitudinaux (13, 14) sont joints au côté supérieur (24) du profilé de torsion (4).

7. Essieu à traverse déformable en torsion selon l'une quelconque des revendications 3 à 6, **caractérisé en ce qu'**une zone de paroi supérieure (17) de la section centrale (5) se convertit via une section de transition (18) en une zone de paroi inférieure (19) d'une section d'extrémité (6, 7).

8. Procédé de fabrication d'un profilé de torsion (4) pour un essieu à traverse déformable en torsion selon l'une quelconque des revendications 1 à 7, dans lequel on prépare une platine (8) qui possède une section centrale (5) et des ailes (10, 11) élargies côté extrémité par rapport à la section centrale (5) et la platine (8) est déformée vers le profilé de torsion (4), dans lequel la section centrale (5) présente un profil en U ou en V ouvert d'un côté et les ailes (10, 11) sont façonnées sur les sections d'extrémité (6, 7) se raccordant à la section centrale (5) avec un profil creux fermé et les ailes (10, 11) sont jointes le long de leurs bords longitudinaux adjacents (13, 14), **caractérisé en ce que** les ailes (10, 11) sont façonnées vers l'extérieur du côté ouvert (12) de la section centrale (5) et sont jointes l'une à l'autre dans un plan longitudinal horizontal (HLE1) se situant au-dessus du côté ouvert (12) de la section centrale (5).

9. Procédé selon la revendication 8, **caractérisé en ce que** la platine (8) est conformée de manière qu'une zone de paroi supérieure (17) de la section centrale (5) se convertisse via une section de transition (18) en une zone de paroi inférieure (19) d'une section d'extrémité (6, 7).

10. Procédé selon la revendication 8 ou la revendication 9, **caractérisé en ce que** des bords latéraux internes (22, 23) se trouvant du côté de la section centrale (5) et s'étendant transversalement aux bords longitudinaux (13, 14) viennent en contact avec la partie supérieure du profilé de torsion (4) et sont jointes au moins en partie à celui-ci.
